Europäisches Patentamt

European Patent Office

Office européen des brevets

(19)

(11) **EP 1 069 710 A1**

(12) **EUROPEAN PATENT APPLICATION**

(43) Date of publication:
**17.01.2001 Bulletin 2001/03**

(51) Int Cl.$^7$: **H04B 7/185**, H04B 7/26

(21) Application number: **99500120.3**

(22) Date of filing: **15.07.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventors:
• **Rodriguez Martinez, Ma. Africa**
  **28005 Madrid (ES)**

• **Ortega Rodriguez, Fernando**
  **28220 Majadahonda, Madrid (ES)**

(74) Representative: **Lamoureux, Bernard et al**
  **Alcatel Espana, S.A,**
  **Patent department,**
  **Ramirez de Prado, 5**
  **28045 Madrid (ES)**

(54) **Method of multimode access in satellite communications and frame structure for said multimode access**

(57)    A method of multimode access in a radio communications system in general and in a satellite communications system in particular, and a frame structure for use in such method. The radio communications system comprises at least a first and a second transmission modes with different transmission rates. According to the invention by allocating an information symbols part within an entire frame of one of said transmission modes based on a predetermined proportion of said information symbols part with respect to said entire frame a new transmission symbol rate is obtained which is set to be the same as that of the second transmission mode, thus allowing for the combination of said first and second modes for transmission in the same transmission symbol rate.

Fig. 2

## Description

The present invention relates to a method of multimode access in a radio communications system in general and in a satellite communications system in particular, and a frame structure for use in such method. More specifically the method and the frame proposed herein by the invention are suitable for a multimode access in satellite communications comprising at least a first and a second transmission modes with different transmission rates, and wherein by allocating an information symbols part within an entire frame of one of said transmission modes based on a predetermined proportion of said information symbols part with respect to said entire frame a new transmission symbol rate is obtained which is the same as that of the second transmission mode, thus allowing for the combination of said first and second modes for transmission in the same transmission rate.

## BACKGROUND OF THE INVENTION

In satellite communications using onboard digital processing, the transmission is usually made in multimode form. An example of a known multimode satellite communications system is known from the so called SKYPLEX project headed by the Agence Spatiale Européenne, which is used for satellite onboard multiplexing of television channels. In this system, the uplink transmission is carried out using FDMA (Frequency Division Multiple Access) with two types of carrier modes, namely the SCPC (Single Channel Per Carrier) and the TDMA (Time Division Multiple Access), each being transmitted at different transmission rates, i.e. R and R/$\alpha$ respectively, $\alpha$ being the frame efficiency in TDMA represented by the following formula:

$$\alpha = \text{number of information symbols/(number of}$$

$$\text{transmitted symbols + guard time)};$$

such that 1/$\alpha$ > 1, which implies that the transmission rate in the TDMA mode is higher than that in the SCPC mode. Each mode conventionally requires a separate complex hardware in order to carry out the corresponding demodulation processes. In the above example, there would be required a complex analogue bank of filters, two specific demodulation architectures and two sets of oscillators for processing of the different transmission rates. As a consequence of the increase in the use of hardware, the first problem raised is that of expenses due to the high cost of devices employed such as an onboard demodulator or an onboard oscillator. A further problem is that of increased weight. The more the number of devices onboard a satellite, the higher the weight thereof. The problem of weight has always been of concern in the satellite industry, as it is always desired to maintain the total weight of the satellite arrangement at a reasonably low level.

For example in the SKYPLEX system, the implementation adopted was that of using a conventional analogue demultiplexing scheme and a dual mode demodulator capable of demodulating continuous and burst data by configuring through telecommand.

A solution for the problem of using different demodulators for different transmission rates is known from US patent number 5297136 to Agence Spatiale Européenne which discloses a muticarrier demodulator in which a frequency band of a multiple carrier signal is divided into a number of subbands, the data contained in each sub-band being then sampled at a predetermined rate to produce a spaced sequence of samples. The data samples are next multiplexed generating a composite signal which transmits the data at a high rate suitable for demodulation by a conventional multiple carrier demodulator.

Although US patent number 5,297,136 discloses the use of a less complex conventional demodulator, it requires the transmitted symbol rates to have a common integer multiple factor (if R is the basic symbol rate, only M·R rates are allowed, M being an integer, i.e. R, 2R, ...). This solution however is not suitable for combining two transmission modes in which the rate ratio between said two modes is not an integer, such as for example in the case of TDMA and SCPC combination where the rate ratio between the two access modes is usually less than 1.1.

It is therefore desired to provide a method of multimode access in satellite communications to overcomes the above drawbacks. Furthermore, it is desired to provide a frame structure to be used in such method.

## DESCRIPTION OF THE INVENTION

The present invention proposes transmission of data in the form of a compatible combination of at least two modes of transmission having different transmission rates, such that due to said combination a common transmission rate is obtained for transmitting of the different modes. In this manner, by having the same transmission rate, the demodulation process of both modes is carried out by means of one and the same demodulator. A practical example of this combination for the purpose of the present invention is a combination between a continuous wave (CW) mode, for instance when SCPC is transmitted in CW, and a burst type transmission mode such as TDMA; however a person skilled in the art would realize that other combinations of access modes are also possible within the scope of the present invention.

According to an object of the present invention, there is provided a method of multimode access in satellite communications comprising at least a first and a second transmission modes, said at least first mode comprising transmission frames containing data in the form of information symbols, wherein the method comprises the steps of:

- occupying entirely a frame by a number of transmitted symbols,
- allocating an information symbols part within the frame such that a proportion of said information symbols part with respect to said transmitted symbols of the entire frame is expressed as $\alpha=I/K$ where I and K are integers and I<K, and
- defining a transmission symbol rate in said second transmission mode equal to $R/\alpha$ where R is information symbol rate common to said at least first and second transmission modes so as to allow for the transmission of said at least first and second modes in the same transmission symbol rate.

According to one aspect of the invention, there is provided a method wherein the remaining portion of said frame not occupied by said information symbols part is occupied by an overhead symbols part.

According to another aspect of the present invention, there is provided a method wherein an acquisition preamble part, common to said at least first and second transmission modes, is transmitted within said overhead symbols part.

According to a further object of the present invention, there is provided a frame structure for multimode access in satellite communications having an information symbol rate R and a transmission symbol rate $R/\alpha$, $\alpha$ representing frame efficiency, wherein said frame structure is entirely occupied by a number of transmitted symbols containing an information symbols part such that a proportion of said information symbols part with respect to said transmitted symbols of the entire frame is expressed as $\alpha=I/K$ where I and K are integers and I< K.

According to a further aspect of the present invention, there is provided a frame structure wherein the remaining portion of said frame not occupied by said information symbols part is occupied by an overhead symbols part.

According to still a further aspect of the invention, there is provided a frame structure wherein an acquisition preamble part is included within said overhead symbols part.

These and further features of the invention are described in more detail hereinbelow as well as in the claims with the aid of the accompanying drawings.

## BRIEF DESCRIPTION OF THE DRAWINGS

Figure 1 is a representation of a conventional sequence of two frames in a TDMA mode.

Figure 2 is a representation of frames formed by the combination of a CW mode and a TDMA mode according to the invention.

Figure 3 is a representation of a further embodiment of the frame of figure 2.

## DESCRIPTION OF A PREFERRED EMBODIMENT

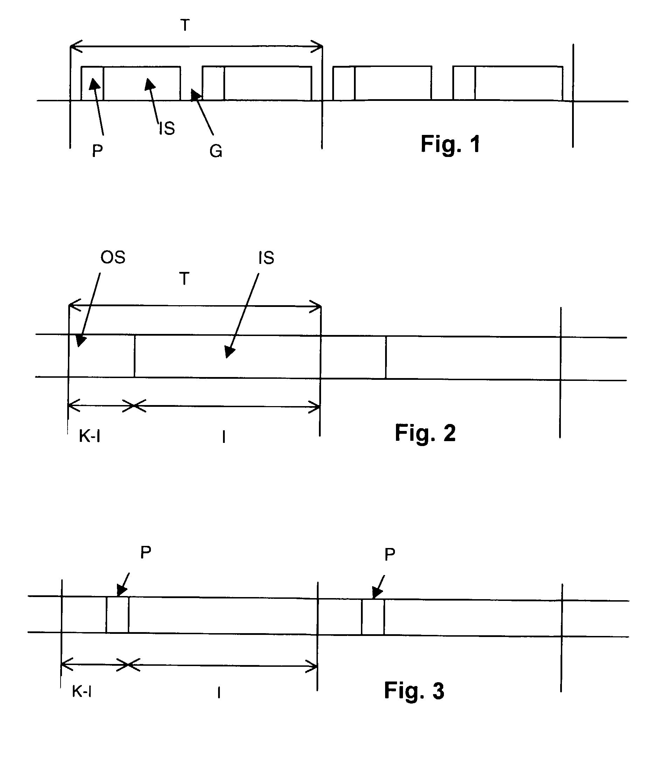

Referring to figure 1, a TDMA frame is shown with a duration time T, within the frame there may exist a part containing information data IS which carries data related to the traffic, be it voice, data, video or a combination thereof, and is transmitted in discontinuous form, for example in the form of bursts, as shown in the figure. Each information data part IS follows a preamble part P, which may carry data related to acquisition information.

Each information data part IS has a corresponding number of transmission symbols and is followed by a guard time period G. The above describes a structure corresponding to a conventional frame in the TDMA mode.

For the purpose of the present invention, the expression "symbol" is meant to refer to a set of information bits which depending upon the type of modulation may vary. For example, in a BPSK modulation, a symbol is a bit, whereas in a QPSK modulation, a symbol consists of two bits. For other types of modulation the number of bits in a symbol may also vary. In any case, it is to be noted that a frame may be occupied by a number of symbols. Now if we select the frame duration T to be occupied entirely by a number of symbols, then the entire frame may be divided in time as shown in figure 2, comprising an information symbols part IS having an integer number of information symbols represented as I, and an overhead symbols part OS having an integer number of overhead symbols represented as K-I, where I and K are integers and I< K. This means that the frame efficiency $\alpha$ as defined above is expressed as $\alpha = I/K$.

From the above it may be concluded that if the information symbol rate is defined as R, then the transmission symbol rate is $R/\alpha$. In this manner a new frame structure is provided such that the whole frame duration is occupied entirely by an integer number of symbols. For this reason, the new frame structure while maintaining its burst-form, has adopted at the same time a continuous form, thus allowing the combination of TDMA and CW modes.

On the other hand, in a continuous wave (CW) mode, the information symbol rate and the transmission symbol rate are usually equal. However, according to the invention a CW system may be implemented such that while maintaining the information symbol rate unchanged, i.e. equal to R, has a transmission symbol rate equal to $R/\alpha$ which is the same transmission rate as in TDMA, thus providing the possibility of transmitting both modes in the same transmission rate. The direct consequence of this is that the system would then require the use of only one demodulator to demodulate both modes of transmission.

Advantageously, only one and the same acquisition preamble P may be used for both modes. The acquisition preamble P is transmitted within the overhead symbols part OS of the frame. In figure 3 this alternative is shown in which the acquisition preamble P occupies, in an exemplary manner, the last symbols of the overhead symbols part OS.

As mentioned above, the TDMA and CW modes have been described herein as mere non limitative examples, however other modes known to a person skilled in the art may also be employed within the scope of the present invention.

According to the foregoing, the method and the frame structure of the present invention provide the possibility of using one and the same demodulator as well as the same local oscillators for processing the two transmission modes. Nevertheless it is to be noted that more than two modes of transmission may also be transmitted in the same transmission rate by implementing the teachings of the present invention. A further advantage provided is that of a more efficient and compact digital implementation, which is made possible by the invention, for demultiplexing carriers in the reception part.

It is to be noted that an increase in the transmission rate, for example in CW mode by a factor of $1/\alpha$, would require the transmission power to be increased by $10 \log 1/\alpha$. However generally $1/\alpha < 1.1$ which implies that said increase is negligible.

## Claims

1. Method of multimode access in satellite communications comprising at least a first and a second transmission modes, said at least first mode comprising transmission frames containing data in the form of information symbols, characterised by comprising the steps of:

   - occupying entirely a frame by a number of transmitted symbols,
   - allocating an information symbols part (IS) within the frame such that a proportion of said information symbols part (IS) with respect to said transmitted symbols of the entire frame is expressed as $\alpha = I/K$ where I and K are integers and I< K, and
   - defining a transmission symbol rate in said second transmission mode equal to $R/\alpha$ where R is information symbol rate common to said at least first and second transmission modes so as to allow for the transmission of said at least first and second modes in the same transmission symbol rate.

2. Method according to claim 1, wherein the remaining portion of said frame not occupied by said information symbols part (IS), is occupied by an overhead symbols part (OS).

3. Method according to claim 2, wherein an acquisition preamble part (P), common to said at least first and second transmission modes, is transmitted within said overhead symbols part (OS).

4. A frame structure for multimode access in satellite communications having an information symbol rate R and a transmission symbol rate $R/\alpha$, wherein $\alpha$ represents frame efficiency, characterised in that said frame structure is entirely occupied by a number of transmitted symbols containing an information symbols part (IS) such that a proportion of said information symbols part (IS) with respect to said transmitted symbols of the entire frame is expressed as $\alpha = I/K$ where I and K are integers and I< K.

5. A frame structure according to claim 4, wherein the remaining portion of said frame not occupied by said information symbols part (IS), is occupied by an overhead symbols part (OS).

6. A frame structure according to claim 5, wherein an acquisition preamble part (P) is included within said overhead symbols part (OS).

**Fig. 1**

T

P

IS

G

**Fig. 2**

OS

IS

T

K-I

I

**Fig. 3**

P

P

K-I

I

**European Patent Office**

## EUROPEAN SEARCH REPORT

Application Number

EP 99 50 0120

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 607 364 A (NEUMANN ET AL.) 19 August 1986 (1986-08-19) * column 2, line 64 - column 5, line 60 * | 1,4 | H04B7/185 H04B7/26 |
| A | EP 0 663 776 A (GENERAL INSTRUMENT CORPORATION OF DELAWARE) 19 July 1995 (1995-07-19) * column 2, line 53 - column 3, line 42 * | 2,5 | |
| A | US 5 673 266 A (LI) 30 September 1997 (1997-09-30) * claims 1-57 * | 3,6 | |
| A | US 5 781 540 A (MALCOLM ET AL.) 14 July 1998 (1998-07-14) * claims 1-21 * | 1-6 | |
| A | C.ELIA ET AL.: "Skyplex: distributed up-link for digital television via satellite" IEEE TRANSACTIONS ON BROADCASTING, vol. 42, no. 4, December 1996 (1996-12), pages 305-313, XP002132140 * page 305, column 1, line 1 - page 307, column 1, line 4 * | 1-6 | **TECHNICAL FIELDS SEARCHED (Int.Cl.7)** H04B |

The present search report has been drawn up for all claims

| Place of search | Date of completion of the search | Examiner |
|---|---|---|
| THE HAGUE | 3 March 2000 | Bischof, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 50 0120

This annex lists the patent family members relating to the patent documents cited in the above–mentioned European search report.
The members are as contained in the European Patent Office EDP file on
The European Patent Office is in no way liable for these particulars which are merely given for the purpose of information.

03-03-2000

| Patent document cited in search report | | Publication date | Patent family member(s) | | Publication date |
|---|---|---|---|---|---|
| US 4607364 | A | 19-08-1986 | CA | 1228146 A | 13-10-1987 |
| | | | EP | 0161300 A | 21-11-1985 |
| | | | IT | 1177119 B | 26-08-1987 |
| | | | JP | 61500403 T | 06-03-1986 |
| | | | WO | 8502311 A | 23-05-1985 |
| EP 663776 | A | 19-07-1995 | US | 5475716 A | 12-12-1995 |
| | | | AU | 678871 B | 12-06-1997 |
| | | | AU | 1026995 A | 27-07-1995 |
| | | | CA | 2140483 A | 19-07-1995 |
| | | | JP | 7288550 A | 31-10-1995 |
| | | | NO | 950191 A | 19-07-1995 |
| US 5673266 | A | 30-09-1997 | US | 5537410 A | 16-07-1996 |
| US 5781540 | A | 14-07-1998 | NONE | | |

EPO FORM P0459

For more details about this annex : see Official Journal of the European Patent Office, No. 12/82